Europäisches Patentamt

European Patent Office

Office européen des brevets

(19)

(11) Veröffentlichungsnummer: **0 327 728 B1**

# (12) EUROPÄISCHE PATENTSCHRIFT

(45) Veröffentlichungstag der Patentschrift: **03.06.92**

(51) Int. Cl.⁵: **B60R 19/24**

(21) Anmeldenummer: **88121750.9**

(22) Anmeldetag: **28.12.88**

(54) **Stossfangvorrichtung für Kraftfahrzeuge.**

(30) Priorität: **12.02.88 DE 3804386**

(43) Veröffentlichungstag der Anmeldung:
**16.08.89 Patentblatt 89/33**

(45) Bekanntmachung des Hinweises auf die
Patenterteilung:
**03.06.92 Patentblatt 92/23**

(84) Benannte Vertragsstaaten:
**DE FR GB IT SE**

(56) Entgegenhaltungen:
**EP-A- 0 057 155**
**DE-A- 2 747 224**
**DE-A- 2 756 537**
**US-A- 4 661 030**

(73) Patentinhaber: **Dr.Ing.h.c. F. Porsche Aktiengesellschaft
Porschestrasse 42
W-7000 Stuttgart 40(DE)**

(72) Erfinder: **Goesse, August-Wilhelm, Dipl.-Ing.
FH
Ulmenstrasse 18
W-7251 Mönsheim(DE)**
Erfinder: **Boegge, Herbert, Dipl.-Ing.
Breslauer Strasse 79
W-7141 Schwieberdingen(DE)**
Erfinder: **Kosmann, Ulrich, Dipl.-Ing. FH
Monbachstrasse 37
W-7263 Bad Liebenzell-Monakam(DE)**

## Beschreibung

Die Erfindung betrifft eine Stoßfangvorrichtung für Kraftfahrzeuge gemäß dem Oberbegriff des Patentanspruchs 1.

Bei einer derartigen bekannten Stoßfangvorrichtung (DE-A-2 747 224) ist der Randabschnitt der Verkleidung mit einer formsteifen Leiste versehen, durch die schraubbare Befestigungsglieder hindurchgeführt sind. Mit dieser Ausbildung wird eine gute Befestigung des Randabschnittes am Aufbau erzielt. Nachteilig an dieser Anordnung ist, daß keine Einstellbarkeit der Verkleidung in bezug auf den angrenzenden Aufbau gegeben ist.

Aufgabe der Erfindung ist es, eine Befestigung für einen Randabschnitt einer elastischen Verkleidung zu schaffen, mit der bei guter Halterung die herstellungs- und montagebedingten Toleranzen der Verkleidung ausgleichbar sind, so daß die Verkleidung stets lagerichtig zum angrenzenden Aufbau angeordnet ist.

Erfindungsgemäß wird diese Aufgabe durch die kennzeichnenden Merkmale des Anspruchs 1 gelöst. Zweckmäßige Ausgestaltungen der Erfindung sind in den Unteransprüchen enthalten.

Die mit der Erfindung hauptsächlich erzielten Vorteile sind darin zu sehen, daß durch die von einem Innenraum des Fahrzeuges aus betätigbaren Klemmelemente eine stufenlose Einstellbarkeit der Verkleidung gegeben ist, so daß stets ein bündiger Oberflächenübergang von der Verkleidung zum angrenzenden Aufbau gewährleistet ist. Durch die Ausbildung des Klemmelementes als Strangpreßprofil werden die Herstellungskosten reduziert.

Ein Ausführungsbeispiel der Erfindung ist in der Zeichnung dargestellt und wird im folgenden näher erläutert.

Es zeigt

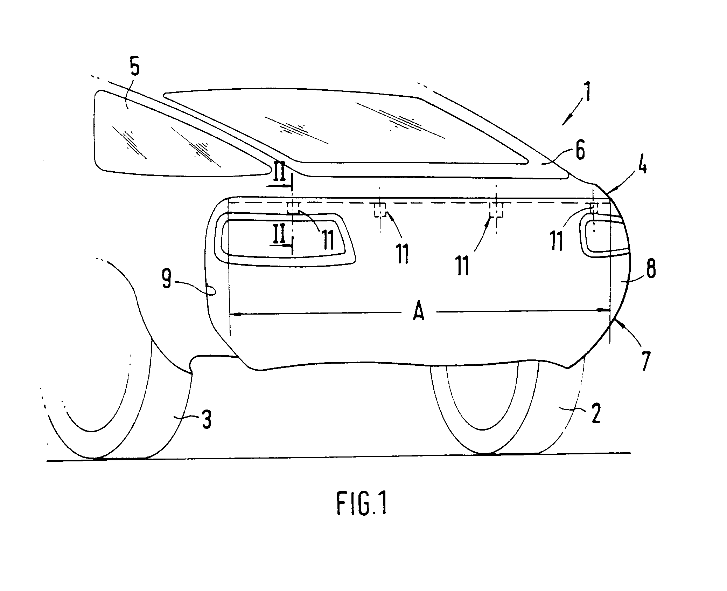

Fig. 1     eine Schrägansicht eines Heckbereiches eines Kraftfahrzeuges mit einer Stoßfangvorrichtung nach der Erfindung,

Fig. 2     einen Schnitt nach der Linie II-II der Fig. 1 in größerem Maßstab,

Fig. 3     eine Seitenansicht auf eine erste Ausführungsform eines erfindungsgemäßen Klemmelementes,

Fig. 4     eine Seitenansicht auf eine zweite Ausführungsform des Klemmelementes.

Das Kraftfahrzeug 1 weist in dem dargestellten Bereich Räder 2 und 3 und einen Aufbau 4 mit Seitenscheiben 5 sowie eine Heckklappe 6 auf. Der Aufbau 4 ist mit einer Stoßfangvorrichtung 7 versehen, die durch eine Verkleidung 8 und einen nicht näher gezeigten, hinter dieser Verkleidung angeordneten, formsteifen Träger gebildet wird. Dieser Träger trägt die Verkleidung 8 und stützt sich an hydraulischen Dämpfern ab, was ebenfalls nicht dargestellt ist. Die Verkleidung 8 besteht aus elastischem Werkstoff, z. B. Polyurethan, und gibt bei einem Stoß, der beispielsweise bei doppelter Schrittgeschwindigkeit des Fahrzeuges entsteht, nach und nimmt hinterher selbsttätig wieder ihre ursprüngliche Form an.

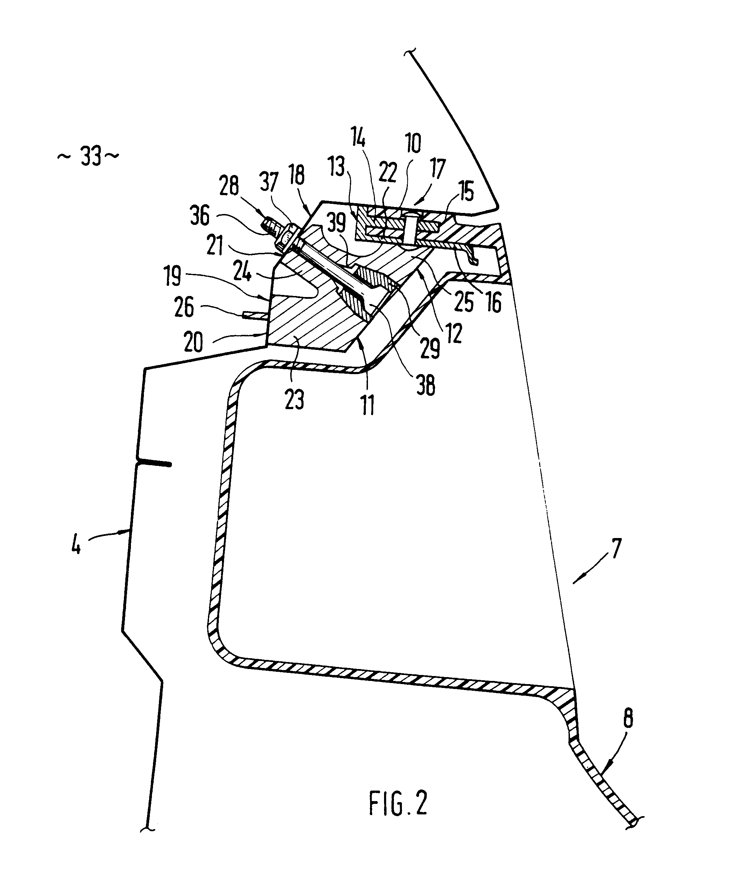

Die Befestigung der Verkleidung 8 erfolgt entlang einer Trennlinie 9. Hierzu weist die Verkleidung 8 zumindest in einem obenliegenden Bereich einen waagrecht ausgerichteten flanschartigen Randabschnitt 10 auf, der mittels örtlich angeordneter Klemmelemente 11 gegen einen nischenförmigen Bereich 12 des Aufbaus 4 gespannt wird (Fig. 2). Der Randabschnitt 10 ist zumindest über einen Teilbereich A der Trennlinie 9 mit einer formsteifen Leiste 13 versehen. Die Leiste 13 besteht aus Aluminium, Stahl oder einem anderen, einen hohen Elastizitätsmodul aufweisenden Werkstoff und weist eine profilierte Form auf.

Ein Steg 14 der Leiste 13 ragt in eine Aussparung 15 des Randabschnittes 10 hinein, wogegen ein parallel dazu verlaufender zweiter Steg 16 an der Unterseite des Randabschnittes 10 anliegt. Die Leiste 13 ist durch Kleben und/oder Nieten mit dem Randabschnitt 10 verbunden. Der nischenförmige Bereich 12 setzt sich aus einem etwa horizontal verlaufenden Wandabschnitt 17, einem daran anschließenden, schrägverlaufenden Eckbereich 18 und einem etwa vertikal ausgerichteten Wandabschnitt 19 zusammen.

Jedes winkelförmig ausgebildete Klemmelement 11 weist zwei unterschiedlich ausgerichtete Anlageflächen 20, 21 und eine Stützfläche 22 auf, wobei die Anlageflächen 20, 21 und die Stützfläche 22 an drei unterschiedlich geneigten Armen 23, 24, 25 des Klemmelementes 11 vorgesehen sind. Die freien Enden der Arme 23 bis 25 sind zu dem nischenförmigen Bereich 12 hin gerichtet.

Die erste, am untenliegenden Arm 23 angeordnete Anlagefläche 20 ist etwa vertikal ausgerichtet und stützt sich am parallel dazu verlaufenden Wandabschnitt 19 ab. Zur Fixierung des Klemmelementes 11 ist an der ersten Anlagefläche 20 ein vorstehender Positionierstift 26 angebracht, der durch eine nicht näher dargestellte Öffnung des Wandabschnittes 19 hindurchgeführt ist. Die zweite Anlagefläche 21 ist am mittleren Arm 24 des Klemmelementes 11 vorgesehen und stützt sich am schrägverlaufenden Eckbereich 18 ab. Die Stützfläche 22 wird durch die Oberseite des dritten Armes 25 gebildet und kann örtlich mit einer rillenförmigen Profilierung oder dergleichen versehen werden, so daß ein guter Halt zwischen der Stützfläche 22 und der Leiste 13 bei festgelegter Verkleidung 8 erzielt wird. Das Klemmelement 11 wird vorzugsweise durch ein Strangpreßprofil gebildet.

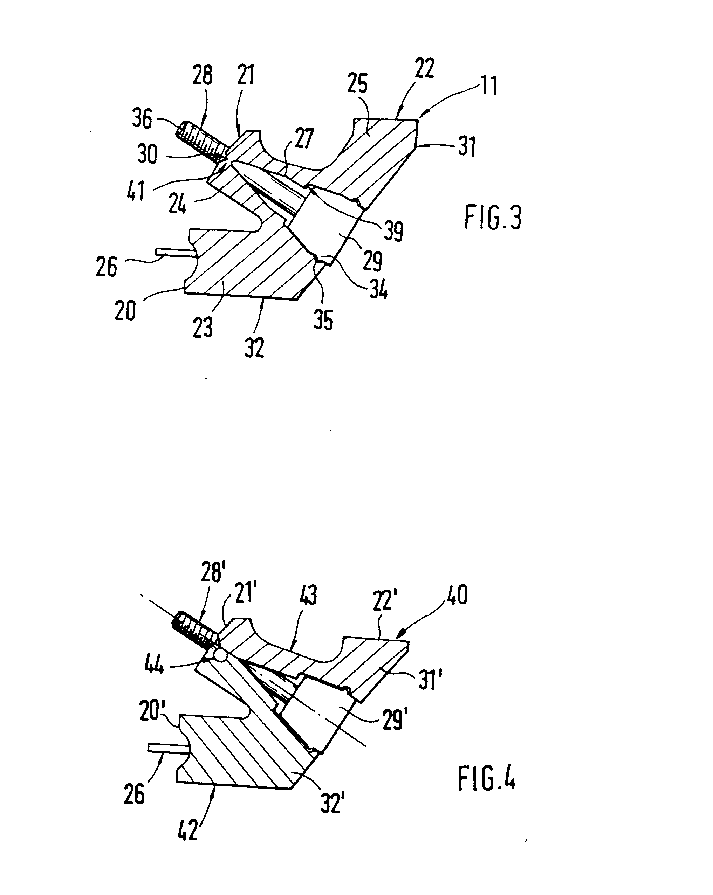

Eine stufenlose Verstellung der Stützfläche 22 wird dadurch erzielt, daß am Klemmelement 11 im Bereich des mittleren Armes 24 eine Ausnehmung 27 vorgesehen ist, die auf der dem nischenförmigen Bereich 12 abgekehrten Seite offen ausgebildet ist (Fig. 3). In die Ausnehmung 27 ist ein mit einem Befestigungsglied 28 zusammenwirkendes Spreizglied 29 eingesetzt. Gemäß einer ersten Ausführungsform sind die drei Arme 23, 24 und 25 an einem einstückigen Bauteil vorgesehen, wobei die etwa dreieckförmig profilierte Ausnehmung 27 annähernd bis zur zweiten Anlagefläche 21 reicht. Der Grund der Ausnehmung 27 und eine auf der gegenüberliegenden Seite angeordnete, horizontale Quernut 30 sind so angeordnet, daß das Klemmelement 11 eine Sollbiegestelle 41 aufweist, die es in eine obere Halfte 31 und in eine untere Hälfte 32 unterteilt. Durch Anziehen des Befestigungsgliedes 28 wird das keilförmige Spreizglied 29 in Richtung Fahrzeuginnenraum 33 (Kofferraum) bewegt, so daß die obere Halfte 31 des Klemmelementes 11 mit der Stützfläche 22 nach oben gegen den Randabschnitt 10 der Verkleidung 3 gedrückt wird. Das keilförmige Spreizglied 29 wird von der Seite her in die Ausnehmung 27 eingeschoben und ist in Montagestellung B gegen Herausfallen in Längsrichtung gesichert. Dies wird dadurch erreicht, daß an den beiden der Ausnehmung 27 zugekehrten Seiten des Spreizgliedes 29 jeweils eine rillenförmige Anformung 34 angebracht ist, die in eine muldenförmige Nut 35 des Ausnehmung 27 eingreift.

Das durch eine Schraube 36 und eine Mutter 37 gebildete Befestigungsglied 28 ist ebenso wie der zweite Arm 24 des Klemmelementes 11 etwa senkrecht zum schrägverlaufenden Eckbereich 18 ausgerichtet. Die Schraube 36 ist durch eine Öffnung des Spreizgliedes 29, die Ausnehmung 27, den mittleren Arm 24 und den schrägverlaufenden Eckbereich 18 hindurchgefuhrt und überragt letzteren, wobei auf das vorstehende freie Ende der Schraube 36 vom Fahrzeuginnenraum 33 her auf die Mutter 37 aufgedreht wird. Der Kopf 38 der Schraube 37 ist verdrehsicher und verdeckt im Spreizglied 29 aufgenommen. Schraube 37 und Spreizglied 29 konnen entweder einstückig oder aber zweiteilig ausgebildet sein.

Die Axialbewegung des Spreizgliedes 29 ist in Richtung Fahrzeuginnenraum 33 durch einen stufenförmigen Anschlag 39, der an der Ausnehmung 27 vorgesehen ist, begrenzt.

Fig. 4 zeigt eine zweite Ausführungsform eines Klemmelementes 40, wobei dieses aus zwei gelenkig miteinander verbundenen Teilen 42, 43 besteht. Das Spreizglied 29', das Befestigungsglied 28' und die einzelnen Anlage- und Stützflächen 20', 21', 22' sind dabei identisch ausgebildet wie beim Klemmelement 11. Anstelle der Sollbiegestelle 41 ist die obere Hälfte 31' bei 44 gelenkig mit der unteren Hälfte 32' verbunden. Hierzu ragt ein zylindrischer Abschnitt des oberen Teiles 31' in eine korrespondierende Aufnahme des Teiles 32' hinein. Auch die Positionierung am Aufbau 4 erfolgt beim Klemmelement 40 in derselben Weise wie beim Klemmelement 11.

**Patentansprüche**

1. Stoßfangvorrichtung (7) für Kraftfahrzeuge (1), bestehend aus einem sich quer zur Fahrzeuglängsrichtung erstreckenden formsteifen Träger, der gegenüber dem Fahrzeug abgestützt ist, und aus einer den Trager abdeckenden Verkleidung (8), wobei ein mit einer formsteifen Leiste versehener Randabschnitt der Verkleidung am angrenzenden Aufbau des Kraftfahrzeuges befestigt ist, dadurch gekennzeichnet, daß der Randabschnitt (10) der Verkleidung (8) mittels örtlich angeordneter Klemmelemente (11, 40) gegen einen nischenförmig ausgebildeten Bereich (12) des Aufbaus (4) gespannt ist, wobei die am Aufbau (4) vorpositionierten Klemmelemente (11, 40) durch schraubbare Befestigungsglieder (28) in Lage gehalten sind und daß die mit Spreizgliedern (29) zusammenwirkenden Befestigungsglieder (28) von einem Fahrzeuginnenraum (33) aus betätigbar sind.

2. Stoßfangvorrichtung nach Anspruch 1, dadurch gekennzeichnet, daß sich der nischenförmige Bereich (12) zur Festlegung des Randbereiches (10) der Verkleidung (8) aus einem etwa horizontal verlaufenden Wandabschnitt (17), einem daran anschließenden, schrägverlaufenden Eckbereich (18) und einem etwa vertikal ausgerichteten Wandabschnitt (19) zusammensetzt.

3. Stoßfangvorrichtung nach den Ansprüchen 1 und 2, dadurch gekennzeichnet, daß das winkelförmig ausgebildete Klemmelement (11, 40) zwei unterschiedlich ausgerichtete Anlageflächen (20, 21) und eine Stützfläche (22) aufweist, wobei zwischen der Stützfläche (22) und dem horizontalem Wandabschnitt (17) der Randabschnitt der Verkleidung (8) eingespannt ist.

4. Stoßfangvorrichtung nach Anspruch 3, dadurch gekennzeichnet, daß die Stützfläche (22) an der der Leiste (13) zugekehrten Seite mit einer rillenförmigen Profilierung versehen ist.

5. Stoßfangvorrichtung nach Anspruch 3, dadurch gekennzeichnet, daß die Anlageflächen (20, 21) und die Stützfläche (22) an freistehenden Armen (23, 24, 25) des Klemmelementes (11, 40) vorgesehen sind.

6. Stoßfangvorrichtung nach Anspruch 1, dadurch gekennzeichnet, daß das Klemmelement (11, 40) durch ein Strangpreßprofil gebildet wird.

7. Stoßfangvorrichtung nach den Anspruchen 1 und 3, dadurch gekennzeichnet, daß der die Stützfläche (22) bildende Arm (24) des Klemmelementes (11, 39) durch ein mit dem Befestigungsglied (28) in Wirkverbindung stehendes Spreizglied (29) nach oben gegen den Randabschnitt (10) der Verkleidung (8) bewegbar ist.

8. Stoßfangvorrichtung nach Anspruch 3, dadurch gekennzeichnet, daß an der ersten Anlagefläche (20) des Klemmelementes (11, 40) ein vorstehender Positionierstift (26) angeordnet ist, der durch eine Öffnung des vertikalen Wandabschnittes (19) hindurchgefuhrt ist.

9. Stoßfangvorrichtung nach Anspruch 7, dadurch gekennzeichnet, daß das keilförmige Spreizglied (29) in eine Ausnehmung (27) des Klemmelementes (11, 40) eingesetzt ist.

10. Stoßfangvorrichtung nach Anspruch 7, dadurch gekennzeichnet, daß das Spreizglied (29) von der Seite her in die Ausnehmung (27) einsetzbar ist und gegen Herausfallen in Richtung des Befestigungsgliedes (28) gesichert ist.

11. Stoßfangvorrichtung nach Anspruch 7, dadurch gekennzeichnet, daß an beiden der Ausnehmung (27) zugekehrten Seiten des Spreizgliedes (29) vorstehende, rillenförmige Anformungen (34) vorgesehen sind, die in muldenförmige Nuten (35) der Ausnehmung (27) eingreifen.

12. Stoßfangvorrichtung nach Anspruch 7, dadurch gekennzeichnet, daß die Spannbewegung des Spreizgliedes (29) in Richtung zweite Anlagefläche (21) durch einen Anschlag (39) der Ausnehmung (27) begrenzt ist.

13. Stoßfangvorrichtung nach Anspruch 3, dadurch gekennzeichnet, daß an der zweiten Anlagefläche (21) des Klemmelementes (11, 40), eine Sollbiegestelle (41) vorgesehen ist, die durch die Ausnehmung (27) und eine gegenüberliegende Quernut (30) definiert ist.

14. Stoßfangvorrichtung nach Anspruch 7, dadurch gekennzeichnet, daß der Kopf (38) des Befestigungsgliedes (28) verdrehsicher im Spreizglied (29) aufgenommen ist und daß sich das freie Ende des Befestigungsgliedes (28) durch den schrägverlaufenden Eckbereich (18) des nischenförmigen Bereiches (12) hindurch abschnittsweise in den Fahrzeuginnenraum (33) erstreckt, wobei auf das freie Ende eine Mutter (37) zum Spannen des Klemmelementes (11, 40) aufgesetzt ist.

## Claims

1. A bumper device (7) for motor vehicles (1), comprising a dimensionally stable carrier extending transversely to the longitudinal direction of the vehicle and supported relative to the vehicle, and a cover (8) covering the carrier, an edge portion of the cover provided with a dimensionally stable strip being secured to the adjacent body of the motor vehicle, characterized in that the edge portion (10) of the cover (8) is clamped by means of locally arranged clamping members (11, 40) against an area (12) of the body (4) shaped in the form of a recess, the clamping members (11, 40) positioned at the front on the body (4) being held in position by screwable fastening members (28), and the fastening members (28) cooperating with spreading members (29) are actuable from an interior space (33) of the motor vehicle.

2. A bumper device according to Claim 1, characterized in that the area (12) in the form of a recess for securing the edge portion (10) of the cover (8) is formed by a wall portion (17) extending substantially horizontally, a corner area (18) adjacent thereto and extending obliquely and a wall portion (19) orientated substantially vertically.

3. A bumper device according to Claims 1 and 2, characterized in that the clamping member (11, 40) formed as an angular shape comprises two abutment faces (20, 21) orientated in different ways and a support face (22), the edge portion of the cover (8) being clamped between the support face (22) and the horizontal wall portion (17).

4. A bumper device according to Claim 3, characterized in that the side of the support face (22) facing the strip (13) is provided with a fluted profiling.

5. A bumper device according to Claim 3, characterized in that the abutment faces (20, 21) and the support face (22) are provided on freestanding arms (23, 24, 25) of the clamping member (11, 40).

6. A bumper device according to Claim 1, characterized in that the clamping member (11, 40) is formed by an extrusion profile.

7. A bumper device according to Claims 1 and 3, characterized in that the arm (24) of the clamping member (11, 39 [*sic*]) forming the support face (22) can be moved upwards against the edge portion (10) of the cover (8) by an expansion member (29) operatively connected to the fastening member (28).

8. A bumper device according to Claim 3, characterized in that a projecting positioning pin (26), passing through an opening in the vertical wall portion (19), is mounted on the first abutment face (20) of the clamping member (11, 40).

9. A bumper device according to Claim 7, characterized in that the wedgeshaped expansion member (29) is inserted in a recess (27) in the clamping member (11, 40).

10. A bumper device according to Claim 7, characterized in that the expansion member (29) can be inserted into the recess (27) from the side and is prevented from falling out in the direction of the fastening member (28).

11. A bumper device according to Claim 7, characterized in that fluted mouldings (34) engaging in trough-shaped grooves (35) in the recess (27) are provided on both sides of the expansion member (29) facing the recess (27).

12. A bumper device according to Claim 7, characterized in that the clamping movement of the expansion member (29) is limited in the direction of the second abutment face (21) by a stop (39) of the recess (27).

13. A bumper device according to Claim 3, characterized in that a pre-determined bending point (41), defined by the recess (27) and an opposite transverse groove (30), is provided on the second abutment face (21) of the clamping member (11, 40).

14. A bumper device according to Claim 7, characterized in that the head (38) of the fastening member (28) is received in a rotationally fixed manner in the expansion member (29), and the free end of the fastening member (28) extends in part through the obliquely extending corner area (18) of the recess-shaped area (12) into the interior space (33) of the vehicle, a nut (37) for clamping the clamping member (11, 40) being mounted on the free end.

**Revendications**

1. Dispositif de pare-chocs pour véhicules automobiles (1), constitué d'un support indéformable s'étendant transversalement à la direction longitudinale du véhicule, qui est soutenu par rapport au véhicule, et d'un revêtement (8) recouvrant le support, une partie de bordure du revêtement, pourvue d'une baguette indéformable, étant fixée sur la carrosserie adjacente du véhicule, caractérisé en ce que la partie de bordure (10) du revêtement (8) est serrée, au moyen d'éléments de serrage (11, 40) placés localement, contre une zone (12), en forme de niche, de la carrosserie (4), les éléments de serrage (11, 40), prépositionnés sur la carrosserie (4), étant maintenus en position par des organes de fixation (28) à visser et en ce que les organes de fixation (28), coopérant avec des organes d'écartement (29), peuvent être actionnés à partir de l'espace intérieur (33) du véhicule.

2. Dispositif de pare-chocs selon la revendication 1, caractérisé en ce que la zone (12) en forme de niche, destinée à fixer la zone de bordure du revêtement (8), se compose d'une partie de paroi (17) à peu près horizontale, d'une zone d'angle (18) oblique, s'y raccordant et d'une partie de paroi (19) orientée à peu près verticalement.

3. Dispositif de pare-chocs selon les revendications 1 et 2, caractérisé en ce que l'élément de serrage (11, 40) en équerre comporte deux surfaces d'application (20, 21) orientées différemment et une surface d'appui (22), la partie de bordure du revêtement (8) étant serrée entre la surface d'appui (22) et la partie de paroi (17) horizontale.

4. Dispositif de pare-chocs selon la revendication 3. caractérisé en ce que la surface d'appui (22) est pourvue, sur le côté tourné vers la baguette (13), d'un profilage cannelé.

5. Dispositif de pare-chocs selon la revendication 3, caractérisé en ce que les surfaces d'application (20, 21) et la surface d'appui (22) sont prévues sur des branches (23, 24, 25) libres de l'élément de serrage (11, 40).

6. Dispositif de pare-chocs selon la revendication 1, caractérisé en ce que l'élément de serrage (11, 40) est formé par un profilé extrudé.

**7.** Dispositif de pare-chocs selon les revendications 1 et 3, caractérisé en ce que la branche (24), formant la surface d'appui (22), de l'élément de serrage (11, 39) est déplaçable vers le haut, contre la partie de bordure (10) du revêtement (8), par un organe d'écartement (29) en liaison active avec l'organe de fixation (28).

**8.** Dispositif de pare-chocs selon la revendication 3, caractérisé en ce qu'il est prévu, sur la première surface d'application (20) de l'élément de serrage (11, 40), un doigt de positionnement (26) saillant qui traverse une ouverture de la partie de paroi (19) verticale.

**9.** Dispositif de pare-chocs selon la revendication 7, caractérisé en ce que l'organe d'écartement (29) en forme de coin est inséré dans un évidement (27) de l'élément de serrage (11, 40).

**10.** Dispositif de pare-chocs selon la revendication 7, caractérisé en ce que l'organe d'écartement (29) peut être inséré dans l'évidement (27), à partir du côté et est bloqué de manière à ne pas pouvoir retomber, dans le sens de l'organe de fixation (28).

**11.** Dispositif de pare-chocs selon la revendication 7, caractérisé en ce qu'il est prévu, sur les deux côtés, tournés vers l'évidement (27), de l'organe d'écartement (29), des parties saillantes (34) en forme de cannelures qui s'engagent dans des rainures (35) en forme de gorge de l'évidement (27).

**12.** Dispositif de pare-chocs selon la revendication 7, caractérisé en ce que le mouvement de serrage de l'organe d'écartement (29) en direction de la deuxième surface d'application (21), est limité par une butée (39) de l'évidement (27).

**13.** Dispositif de pare-chocs selon la revendication 3, caractérisé en ce qu'il est prévu, sur la deuxième surface d'application (21) de l'élément de serrage (11, 40), un point de flexion obligé (41) qui est défini par l'évidement (27) et par une rainure transversale (30) opposée.

**14.** Dispositif de pare-chocs selon la revendication 7, caractérisé en ce que la tête (38) de l'organe de fixation (28) est logée de manière à ne pouvoir tourner dans l'organe d'écartement (29) et en ce que l'extrémité libre de l'organe de fixation (28) s'étend en partie dans l'espace intérieur du véhicule (33), à travers la zone d'angle (18) oblique de la zone (12) en forme de niche, un écrou (37) étant placé sur l'extrémité libre, pour serrer l'élément de serrage (11, 40).

FIG.1

~ 33~

FIG. 2

FIG.3

FIG.4